# EUROPEAN PATENT SPECIFICATION

(11) **EP 1 642 750 B1**
(45) Date of publication and mention of the grant of the patent: **15.12.2010**
(21) Application number: 04745989.6
(22) Date of filing: 16.06.2004
(51) Int. Cl.: B43K 23/008

(54) **WRITING INSTRUMENT**
SCHREIBGERÄT
INSTRUMENT D'ECRITURE

(30) Priority: 26.06.2003 JP 2003182020
(43) Date of publication of application: 05.04.2006
(73) Proprietor: Kabushiki Kaisha Pilot Corporation, Tokyo 104-8304 (JP)
(72) Inventor: KOBAYASHI, Yoshihiro, 3720855 (JP); IKEDA, Akinori, 1040031 (JP)
(74) Representative: Zijlstra, Robert Wiebo Johan
(86) International application number: PCT/JP2004/008448
(87) International publication number: WO 2005/000600

(56) References cited:
- WO-A-01/32439
- WO-A-02/26555
- JP-A- 8 207 485
- JP-A- 11 216 985
- JP-A- 11 216 985
- JP-A- 2000 280 681
- JP-A- 2000 355 185
- JP-A- 2001 121 876
- JP-A- 2001 191 681
- JP-A- 2002 337 495
- JP-A- 2003 145 983
- JP-A- 2003 512 960
- JP-B2- 3 348 180
- JP-U- 5 093 882
- JP-U- 55 110 288
- JP-U- 58 175 091
- JP-Y2- 2 552 183
- US-A- 5 000 599

## Description

### TECHNICAL FIELD

The present invention relates to a barrel for a writing implement, having a grip part covered with a grip covering member. More specifically, the present invention relates to a barrel for a writing implement, provided with a grip covering member formed by assembling a soft inner member and an outer member.

### BACKGROUND ART

A known barrel for a writing implement has a grip part covered with a grip covering member formed by assembling an inner member of a soft material and an outer member.

A writing implement having such a barrel is disclosed in JP 8-197883 A relating to "Grip Structure for Writing Implement and Coating Tool". This known writing implement is provided with a flexible, cylindrical grip member sealing therein a gas, a liquid, a gel or a jelly.

A grip for a writing implement is disclosed in JP 2000-355185 A relating to "Grip for Writing Implement". This known grip has an inner member having a Shore hardness between Hs5 and Hs30 (JIS A) and an outer member having a Shore hardness of Hs40 (JIS A) or above. A grip for a writing implement is disclosed in JP 09-169194 A relating to "Grip for Writing Implement". This known grip is formed by partially fusing together two types of resin members respectively having different hardnesses.

WO 02/26555 discloses a grip element having a soft, compressible and deformable outer layer supported by an underlying support structure sufficiently rigid to maintain a receiving channel of the grip element in an open configuration.

JP 2001/191681 discloses a tubular grip installed on the grip portion of a writing utensil having an innermost layer made of a first material having a relatively high hardness, an intermediate layer made of a second material having a relatively lower hardness than that of the first material and an outermost layer made of the first material.

JP 2000/280681 discloses a cylindrical gripping member arranged movably in the longitudinal direction of a barrel cylinder. A coil spring is arranged between the rear step end section of the recess section and the rear end of the gripping member.

JP 11-216985 discloses a barrel cylinder having a grip member comprising press-fitted rubber-form elastic body. The inner peripheral protuberance of the grip member is engaged with a circumferential groove to prevent the grip member from dropping off from the barrel cylinder.

JP 2001/121876 discloses a structure for installing an elastic member on a barrel of a writing implement. The barrel is provided with a rough surface section and mirror face sections formed at least on the surface of one member of the installing section.

JP 08-207485 discloses a grip member fitted to a shaft cylinder of a writing implement by forming a recession in the front part of the shaft cylinder, attaching the grip member of a material which is softer than the material of the shaft cylinder to the recession, and forming the recession to gradually increase the size from around the shaft cylinder toward the rear part.

WO 01/32439 discloses a deformable grip including a low durometer, thermoplastic elastomer layer and a flexible, higher durometer outer layer which is resistant to oil absorption.
Patent document 1: JP 8-197883 A
Patent document 2: JP 2000-355185 A
Patent document 3: JP 09-169194 A

### DISCLOSURE OF THE INVENTION

### Problem to be Solved by the Invention

The flexible, cylindrical grip member sealing therein a gas, a liquid, a gel or a jelly disclosed in Patent document 1 is difficult to fabricate and the gas, the liquid, the gel or the jelly sealed in the flexible, cylindrical grip and it is likely that the gas, the liquid, the gel or the jelly leaks out.

The inner and the outer member of the grip disclosed in Patent document 3 are formed on a barrel by a dip coating method, a spray coating method or a two-color injection molding method. The boundary surfaces of the inner and the outer member are fused together or bonded together. Although dependent on surface roughness, it is very difficult to assemble the grip by covering the previously formed inner member with the outer member because the inner and the outer member made of soft materials need to slide relative to each other and frictional resistance against the relative sliding movement of the inner and the outer member made of soft materials.

Joining the inner and the outer member by fusion is difficult and costly, the grip thus fabricated is expensive and is not suitable for use on low-price products. It is likely that the respective hardnesses of the inner and the outer member changes when the inner and the outer member are joined together by fusion. When the outer member is transparent or semitransparent and the inner and outer member are colored in different colors, respectively, the colors of the inner and the outer member are mixed in the interface between the inner and the outer member and, consequently, the grip cannot be formed in a desired color.

Accordingly, it is an object of the present invention to provide a barrel for a writing implement, provided with a grip having an inner member and an outer member that can be easily assembled.

### Means for Solving the Problem

### Invention

The present invention capable solving the foregoing problem will be described. Parenthesized reference characters corresponding to reference characters to be used for indicating elements of embodiments of the present invention will be attached to elements of the present invention that will be described herein to facilitate understanding the correspondence of the elements that will be described herein and those of the embodiments. The present invention will be described using the reference characters indicating the elements of the embodiments of the present invention to facilitate understanding the present invention. The present invention is not limited in its practical application to the preferred embodiments described herein.

The present invention provides a barrel for a writing implement, comprising: a barrel body having a gripping part; and a grip member of layered structure formed by assembling an inner member of an elastically deformable material and an outer member of an elastically deformable material, and put on the gripping part of the barrel body such that the inner member is in contact with said gripping part; wherein the inner member is covered with the outer member, and at least either of the outside surface of the inner member and the inside surface of the outer member is formed in an assembly facilitating shape for facilitating putting the outer member on the inner member, the assembly facilitating shape comprising at least one of a protruding and depressed shape and a tapered shape; wherein the inside diameter of the outer member is greater than the outside diameter of the inner member; and wherein the outer member is axially compressed when put on the gripping part of the barrel body.

The outer member (5, 15) may be put on the inner member (4, 14) so as to be separable from the inner member (4, 14) and the barrel body (2).

The outer member (5, 15) may be transparent or semitransparent and the inner member (4, 14) may be colored in a color different from that of the outer member (5, 15).

The inside surface of the outer member (5) may be glossy.

The inner member (4, 14) and the outer member (5, 15) may be made of materials of different hardnesses, respectively, the inner members (4, 14) may be made of an elastically deformable material having a low shore hardness of Hs 40 or less, and the outer member (5, 15) may be made of an elastically deformable material having a high shore hardness.

The outer member (15) may be provided with a radially inwardly extending protrusion (20) at the front end thereof and the back end surface (20a) of the protrusion (20) may be in contact with the front end surface (14a) of the inner member (14).

The outer member (5, 15) may have a mean wall thickness between 1 and 5 mm.

### Operation of the Invention

The barrel (1, 11) for a writing implement is provided with the layered grip member (G, G') formed by assembling the inner member (4, 14) of a soft material and the outer member (5, 15) and put on the gripping part (3) of the barrel body (2). The inner member (4, 14) is covered with the outer member (5, 15). At least either of the outside surface (4b, 14b) of the inner member (4, 14) and the inside surface (5b, 15b) of the outer member (5, 15) is formed in the assembly facilitating shape (31, 41, 51) for facilitating putting the outer member on the inner member.

Therefore, in the barrel (1, 11) for a writing implement according to the present invention, the inner member (4, 14) can be easily covered with the outer member (5, 15), and hence the grip member (G, G') can be easily assembled.

When the assembly facilitating shape (31, 41, 51) is a protruding and depressed shape, resistance against the sliding movement of the outer member (5) along the inner member (4) is low and hence the outer member (5) can be easily put on the inner member (4). When the outer member (5) is deformed to bring the outer member (5) into close contact with the inner member (4), the protruding and depressed shape facilitates the flow of air into a space between the inner member (4) and the outer member (5). Consequently, outer member (5) in close contact with the inner member (4) can easily restore its original state.

When the assembly facilitating shape is a tapered shape, the outer member (5, 15) can be easily put on the inner member (4, 14).

When the outer member (5, 15) is detachably put on the inner member (4, 14) put on the barrel body (2) and is not bonded or fused to the inner member (4, 14), the outer member (5, 15) can be replaced with an outer member of a color and a hardness desired by the user.

When the outer member (5, 15) is transparent or semitransparent and the inner member (4, 14) is colored in a color different from that of the outer member (5, 15), characters and decorative patterns formed on the inner member (4, 14) can be visually recognized and can exercise a decorative effect.

When the inside surface of the outer member (5) is glossy, the inner member (4) and characters and decorative patterns formed on the inner member (4) can be easily seen through the outer member (5).

When the inner member (4, 14) and the outer member (5, 15) are made of materials of different hardnesses, respectively, the inner member (4, 14) is made of a soft material having a low hardness, and the outer member (5, 15) is made of a soft material having a high hardness, the outer member (5, 15) made of the soft material having a high hardness which is resistant to swelling due to aging, the possibility that the outer member (5, 15) comes off the inner member (4, 14) due to swelling can be reduced.

When the inside diameter of the outer member (5, 15) is greater than the outside diameter of the inner member (4, 14), and the outer member (5, 15) is axially compressed when put on the grip part (3) of the barrel body (2), the outer member (5, 15) having the inside diameter greater than the outside diameter of the inner member (4, 14) can be easily put on the inner member (4, 14). Since the outer member (5, 15) is axially compressed when the outer member (5, 15) is put on the gripping part (3) of the barrel body (2), the outer member (5, 15) is difficult to be displaced when a force is exerted thereon when the writing implement is used for writing.

When the outer member (15) is provided with the radially inwardly extending protrusion (20) at the front end thereof and the back end surface (20a) of the protrusion (20) is in contact with the front end surface (14a) of the inner member (14), the front end of a large area of the outer member (15) is in contact with the front end of the inner member (14). Therefore, the outer member (15) is resistant to displacement and the radially inwardly extending protrusion exercises an improved effect on preventing the displacement of the outer member (15).

Forming the outer member (5, 15) in a mean wall thickness between 1 and 5 mm is more effective in suppressing the deformation of the outer member (5, 15) than forming the outer member (5, 15) in a wall thickness below 1 mm, facilitates putting the outer member (5, 15) on the inner member (4, 14) and makes the outer member (5, 15) to restore its original state after the outer member (5, 15) is deformed and brought into close contact with the inner member (4, 14). Forming the outer member (5, 15) in a mean wall thickness between 1 and 5 mm is more effective in making the hardness and the color of the inner member (4, 14) effective than forming the outer member (5, 15) in a wall thickness above 5 mm.

The soft material may be chosen from generally known elastic materials for forming the grip members (G, G') of writing implements including elastically deformable silicone rubber, natural rubber, isobutylene-isoprene rubber, fluorocarbon rubber, vinyl chloride resins, butadiene rubber, urethane rubber, polyethylene resins, synthetic rubbers and thermoplastic elastomers. The soft materials respectively having different hardnesses may be one and the same soft materials or different soft materials.

### Effect of the invention

The present invention provides the barrel for a writing implement, provided with the layered grip member that can be formed by easily assembling the inner member and the outer member.

### BEST MODE FOR CARRYING OT THE INVENTION

Preferred embodiments of the present invention will be described with reference to the accompanying drawings, in which like or corresponding members and the same parts are designated by the same reference characters.

### First Embodiment

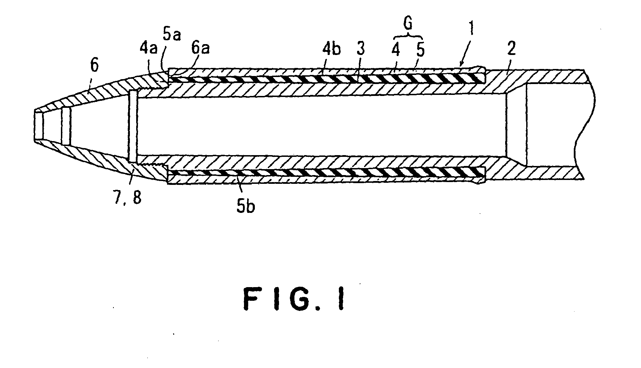

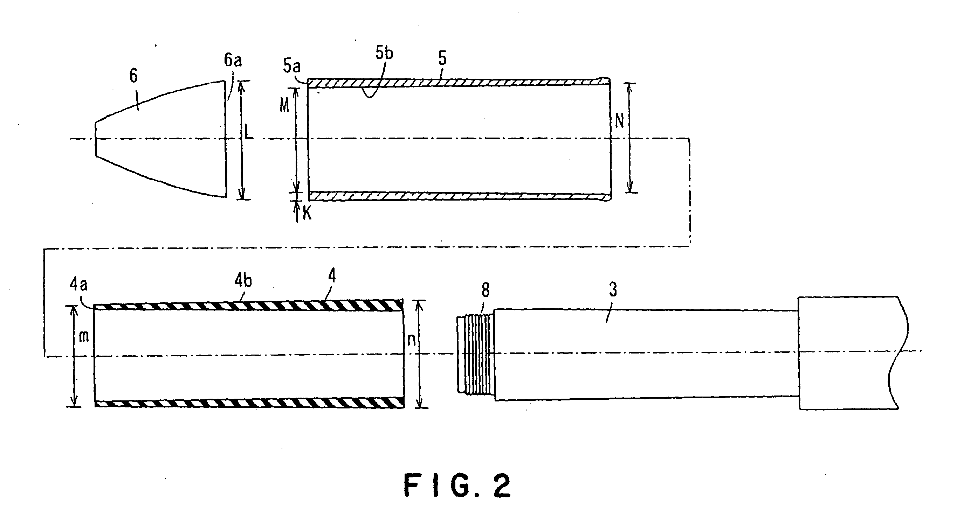

Referring to Figs. 1 and 2, a barrel 1 in a first embodiment according to the present invention for a writing implement has a barrel body 2 made of an acrylonitrile-styrene resin (AS resin). The barrel body 2 has a gripping part 3 of a reduced outside diameter. A grip member G is put on the gripping part 3. The grip member G includes a blue inner member 4 made of silicone rubber having a Shore hardness of Hs30 (JIS A) and a transparent outer member 5 made of silicone rubber having a Shore hardness of Hs70 (JIS A). The inner member 4 is put on the gripping part 3 of the barrel body 2, and then the outer member 5 is put on the inner member 4 so as to cover the inner member 4. A barrel cap 6 having an internally threaded part 7 is attached to the barrel body having an externally threaded part 8 by screwing the internally threaded part 7 on the externally threaded part 8 of the barrel body 2 so that the back end surface 6a of the barrel cap 6 is pressed against the front end surface 4a of the inner member 4 and the front end surface 5a of the outer member 5 to compress the inner member 4 and the outer member 5 to complete the barrel 1 for the writing implement. For example, a ball pen refill having a ball-point tip is inserted in the barrel to form a writing implement.

Fine protrusions and depressions (assembly facilitating shapes) are formed in the outside surface 4b of the inner member 4 and the inside surface 5b of the outer member 5. The protrusions and depressions reduce resistance against the sliding movement of the inside surface 5b of the outer member 5 along the outside surface 4b of the inner member 4 when the outer member 5 is put on the inner member 4 to facilitate assembling the inner member 4 and the outer member 5. Even if the outer member 5 is deformed and the inside surface 5b of the outer member 5 is brought into close contact with the outside surface 4b of the inner member 4 by pressure exerted on the outer member 5 when the writing implement is used for writing, the outer member 5 can easily restore its original state because the outer member 5 is made of the elastically deformable, soft material and the protrusions and depressions facilitate the flow of air into the gap between the inner member 4 and the outer member 5. Although there are not any restrictions on a method of forming the protrusions and depressions and the shapes of the protrusions and depressions, it is preferable that fine protrusions and fine depressions are formed in the outside surface 4b of the inner member 4 and the inside surface 5b of the outer member 5 by, for example, satin finish.

The outer member 5 can be easily put on the inner member 4 by forming the outside surface 4b of the inner member 4 and the inside surface 5b of the outer member 5 in tapered surfaces tapering toward the front ends, respectively (assembly facilitating shapes). When the outside surface 4b of the inner member 4 and the inside surface 5b of the outer member 5 are thus tapered, the outside diameters of the front and the back end of the inner member 4 are **m** and **n,** where **m** < **n,** and the inside diameters of the front and the back end of the outer member 5 are M and N, where M< N.

The soft materials forming the grip member G absorb moisture and oil considerably and swell and the outside diameter of the inner member 4 and the inside diameter of the outer member 5 increase with time. Consequently, the grip member G tends to move axially when the grip member G is pushed forward by force when the writing implement is used for writing and, when things come to the worst, the outer member 5 comes off the barrel body 2. It is possible to make the outer member 5 difficult to be displaced even if force acts on a front part of the barrel 1 when the writing implement is used for writing by forming the outside surface 4b of the inner member 4 and the inside surface 5b of the outer member 5 in tapered surfaces tapering toward the front and increasing the wall thickness K of a front part contiguous with the front end 5a of the outer member 5 in contact with the barrel cap 6.

The outer member 5 can be easily put on the inner member 4 and the outer member 5 has difficulty in coming in close contact with the inner member 4 if the inner member 4 and the outer member 5 are formed such that **m** < M and **n** < N, where **m** and **n** are the outside diameters of the front and the back end of the inner member 4, and M and N are the inside diameters of the front and the back end of the outer member 5. In view of dimensional accuracy dependent on forming conditions, it is desirable that the inside diameter of a part of the outer member 5 is greater than the outside diameter of a part of the inner member 4 corresponding to the part of the outer member 5 by about 0.05 mm.

### Second Embodiment

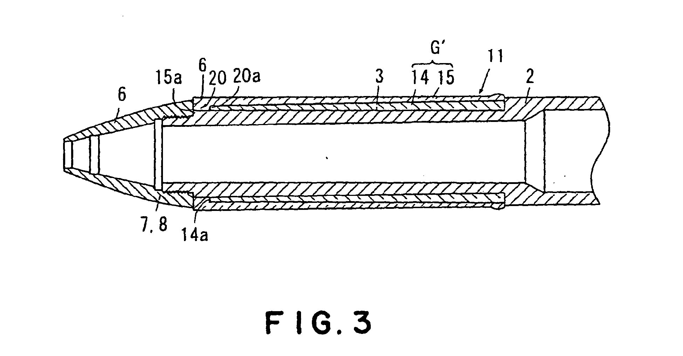

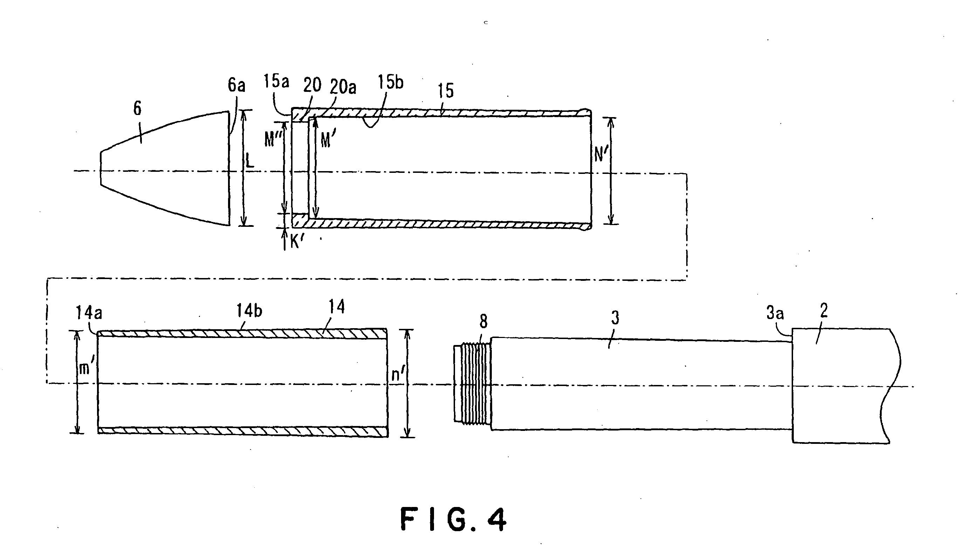

A barrel 11 in a second embodiment according to the present invention for a writing implement shown in Figs. 3 and 4 is substantially the same as the barrel 1 in the first embodiment, except that the barrel 11 in the second embodiment has a grip member G' put on a gripping part 3 of a barrel body 2 and including a semitransparent outer member 15 having a Shore hardness of Hs70 (JIS A) provided with an annular protrusion 20 formed in a front end part thereof so as to protrude radially inward and a transparent inner member 14 having a Shore hardness of Hs50 (JIS A) coated with the outer member 15 with its front end surface 14a in contact with the back end surface 20a of the annular protrusion 20.

Since the front end surface 14a of the inner member 14 is in contact with the back end surface 20a of the radially inwardly protruding annular protrusion 20 of the outer member 15 in an increased contact area, the displacement of the outer member 15 can be effectively prevented by an increased resistance. Since the front end part of the outer member 15 provided with the annular protrusion 20 has an increased wall thickness K', the inside diameter M' of the front end of the outer layer 15 will hardly become greater than the outside diameter of the back end of a barrel cap 6 even if the inner member 14 and the outer layer 15 swell with time and hence the outer member 15 will not be displaced.

The outside surface 14b of the inner member 14 and the inside surface 15b of the outer member 15, similarly to those of the barrel 1 in the first embodiment, are tapered toward the front (formed in assembly facilitating shapes) such that the outside diameters of the front and the back end of the inner member 14 are **m'** and **n',** and the inside diameters of the front and the back end of the outer member 15 are M' and N', where **m'** < **M', n'** < **N'.** Thus the outer member 15 can be easily put on the inner member 14.

### Third Embodiment

A barrel 1 in a third embodiment according to the present invention will be described, in which parts like or corresponding to those of the barrel 1 in the first embodiment are denoted by the same reference characters and the description thereof will be omitted.

The barrel 1 in the third embodiment is the same as the barrel 1 in the first embodiment and differs from the latter only in the following respects.

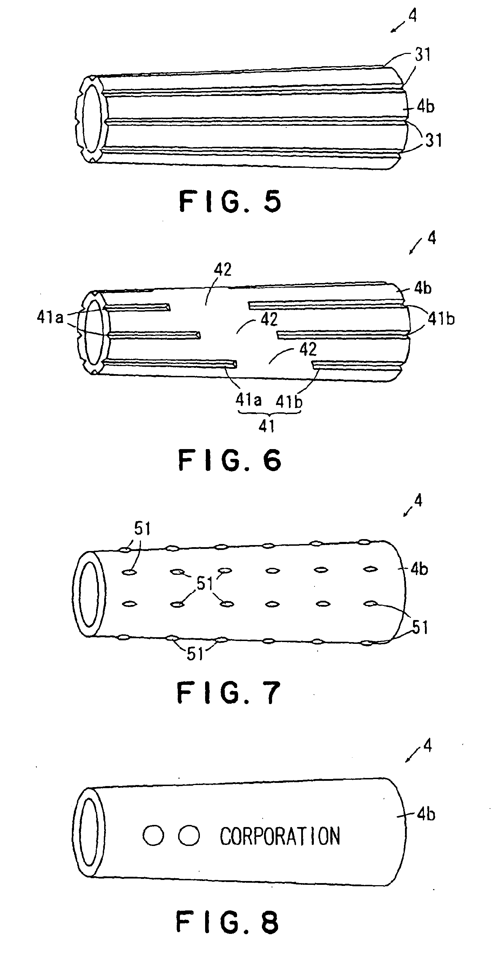

Referring to Fig. 5 showing an inner member 4 of the barrel in the third embodiment for a writing implement in a perspective view, the inner member 4 has an outside surface 4b provided with a plurality of axial grooves (assembly facilitating shapes) 31. When an outer member 5 is put on the inner member 4 so as to cover the inner member 4, the grooves 31 reduces the area of contact between the inner member 4 and the outer member 5. Consequently, frictional resistance against the movement of the outer member 5 relative to the inner member 4 when the outer member 5 is put on the inner member 4 is reduced and hence the outer member 5 can be easily put on the inner member 4. Even if the inside surface 5b of the outer member 5 is brought into close contact with the outside surface 4b of the inner member 4 by pressure applied to the outer member 5 when the writing implement is used for writing, the outer member 5 in close contact with the inner member 4 can easily restore its original shape because air can easily flow into the gap between the inner member 4 and the outer member 5. Axial grooves may be formed in the inside surface 5b of the outer member 5 instead of in the outside surface 4b of the inner member 4 or may be formed in both the outside surface 4b of the inner member 4 and the inside surface 5b of the outer member 5.

### Fourth Embodiment

A barrel 1 in a fourth embodiment according to the present invention will be described, in which parts like or corresponding to those of the barrel 1 in the third embodiment are denoted by the same reference characters and the description thereof will be omitted.

The barrel 1 in the fourth embodiment is the same as the barrel 1 in the third embodiment and differs from the latter only in the following respects.

Referring to Fig. 6 showing an inner member 4 of the barrel 1 in the fourth embodiment for a writing implement in a perspective view, the inner member 4 has an outside surface 4b provided with a plurality of axial grooves (assembly facilitating shapes) 41. Each of the axial grooves 41 is divided into a front groove 41a and a back groove 41b, which are separated by a spacing area 42. As shown in Fig. 6, the spacing areas 42 are formed in a circumferential arrangement at different axial positions, respectively. Thus an outer member 5 of the barrel 1 in the fourth embodiment, similarly to that of the barrel 1 in the third embodiment, can be easily put on the inner member 4. The positions and sizes of the front grooves 41a, the back grooves 41b and the spacing areas 42 may be optionally determined according to a desired design.

### Fifth Embodiment

A barrel 1 in a fifth embodiment according to the present invention will be described, in which parts like or corresponding to those of the barrel 1 in the first embodiment are denoted by the same reference characters and the description thereof will be omitted.

The barrel 1 in the fifth embodiment is the same as the barrel 1 in the first embodiment and differs from the latter only in the following respects.

Referring to Fig. 7 showing an inner member 4 of the barrel 1 in the fifth embodiment for a writing implement in a perspective view, the inner member 4 has an outside surface 4b provided with a plurality of semispherical protrusions (assembly facilitating shapes) 51. Thus an outer member 5 of the barrel 1 in the fifth embodiment, similarly to that of the barrel 1 in the first embodiment, can be easily put on the inner member 4 because resistance against the movement of the outer member 5 relative to the inner member 4 is low.

### Sixth Embodiment

A barrel 1 in a sixth embodiment according to the present invention will be described, in which parts like or corresponding to those of the barrel 1 in the first embodiment are denoted by the same reference characters and the description thereof will be omitted.

The barrel 1 in the fifth embodiment is the same as the barrel 1 in the first embodiment and differs from the latter only in the following respects.

Referring to Fig. 8 showing an inner member 4 of the barrel 1 in the sixth embodiment for a writing implement in a perspective view, the inner member 4 has a satin finished outside surface 4b provided, similarly to that of the barrel 1 in the first embodiment, with fine protrusions and fine depressions (assembly facilitating shapes). Characters indicating a customer's name are printed on the outside surface 4b. The inner member 4 is covered with a transparent outer member 5. Thus user can visually recognize the customer's name through the outer member 5. It is likely that a name printed on the gripping part 3 of the barrel body 2 is difficult to recognize visually when the grip member G has a big wall thickness. In the barrel 1 in the sixth embodiment, the customer's name is printed on the outside surface of the inner member 4 and hence the customer's name can be easily visually recognized when the outer member 5 is not excessively thick.

Characters to be printed on the outside surface 4b of the inner member 4 are not limited to those indicating the customer's name, but may be characters indicating a trade name, or a maker's name, a design or a decorative pattern. The outer member 5 may be semitransparent. The inner member 4 may be semitransparent or transparent. The inner member 4 and the characters printed on the inner member 4 can be easily recognized when the inside surface of the outer member 5 is glossy and the outside surface of the inner member 4 is satin-finished.

### Modifications

Although the present invention has been described in its preferred embodiments, obviously many changes and variations are possible therein without departing from the scope of the present invention as disclosed in the appended claims. Possible modifications will be described below.

Although the grip member of the present invention may be colored in any colors, it is preferable to form the inner and the outer member in different colors, respectively, for an improved decorative effect.

Although the inner and the outer member may be formed in any suitable hardnesses, respectively, it is desirable to make the inner member of a soft material having a low hardness because soft materials having a Shore hardness of Hs40 or below are likely to swell with time.

In each of the foregoing embodiments, the inner and the outer members are formed separately, the inner member is put on the gripping part of the barrel body, and then the outer member is put on the inner member.

According to the present invention, the inner member is covered with the outer member. The outer member may be put on the inner member put on the barrel body or the grip member formed by assembling the inner and the outer member may be put on the barrel body, provided that the corresponding surfaces of the inner and the outer member are not fused or bonded together and the inner member is covered with the outer member. It is preferable to put the outer member detachably on the inner member to enable the replacement of the outer member with another outer member of a color and a soft material having a hardness desired by the user.

Although there are not any particular restrictions on the respective wall thicknesses of the inner and the outer member, the outer member deforms easily, is difficult to put on the inner member and cannot easily restore its original state when the outer member is brought into close contact with the inner member if the wall thickness of the outer member is below 1 mm. Preferably, the mean wall thickness of the outer member is between 1 and 5 mm because the effects of the inner member including the hardness and the color become ineffective when the wall thickness of the outer member is greater than 5 mm. The mean wall thickness of the outer member is the mean of wall thicknesses of parts of the outer member corresponding to the inner member.

The axial grooves 31 and 41 of the barrels in the third and the fourth embodiment may be replaced with axial ridges rising from the outside surfaces 4b.

Each of the grip members G and G' of the barrels in the first and the second embodiment is provided with two types of assembly facilitating shapes, namely, the tapered surface, and the protrusions and depressions. Each of the grip members G and G' may be provided with only either of the two types of assembly facilitating shapes.

### BRIEF DESCRIPTION OF THE DRAWINGS

Fig. 1 is a fragmentally longitudinal sectional view of a barrel in a first embodiment according to the present invention for a writing implement;
Fig. 2 is a sectional view of an essential part of the barrel shown in Fig. 1 for assistance in explaining an assembling procedure;
Fig. 3 is a fragmentally longitudinal sectional view of a barrel in a second embodiment according to the present invention for a writing implement;
Fig. 4 is a sectional view of an essential part of the barrel shown in Fig. 3 for assistance in explaining an assembling procedure;
Fig. 5 is a perspective view of an inner member included in a barrel in a third embodiment according to the present invention for a writing implement;
Fig. 6 is a perspective view of an inner member included in a barrel in a fourth embodiment according to the present invention for a writing implement;
Fig. 7 is a perspective view of an inner member included in a barrel in a fifth embodiment according to the present invention for a writing implement; and
Fig. 8 is a perspective view of an inner member included in a barrel in a sixth embodiment according to the present invention for a writing implement.

### REFERENCE CHARACTERS

1, 11 ... Barrels for writing implements
2 ... Barrel body
3 ... Gripping part
4, 14 ... Inner members
4a, 14a ... Front end surfaces
4b, 14b ... Outside surfaces
5, 15 ... Outer members
5a, 15a ... Front end surfaces
5b, 15b ... Inside surfaces
6 ... Barrel cap
6a ... Back end surface
7 ... Internally threaded part
8 ... Externally threaded part
20 ... Annular protrusion
20a ... Back end surface
31, 41, 41a, 41b, 51 ... Assembly facilitating shapes
G, G' ... Grip members
K, K' ... Thicknesses of the front end parts of outer members
L ... Outside diameter of the back end of the barrel cap
m, m' ... Outside diameters of the front ends of inner members
n, n' ... Outside diameters of the back ends of inner members
M, M' ... Inside diameters of the front ends of outer members
N, N' ... Inside diameters of the back ends of the outer members

## Claims

1. A barrel (1, 11) for a writing implement, comprising:
a barrel body (2) having a gripping part (3); and
a grip member (G, G') of layered structure formed by assembling an inner member (4, 14) of an elastically deformable material and an outer member (5, 15) of an elastically deformable material, and put on the gripping part (3) of the barrel body (2) such that the inner member (4, 14) is in contact with said gripping part (3);
wherein the inner member (4, 14) is covered with the outer member (5, 15), and at least either of the outside surface (4b, 14b) of the inner member (4, 14) and the inside surface (5b, 15b) of the outer member (5, 15) is formed in an assembly facilitating shape for facilitating putting the outer member (5, 15) on the inner member (4, 14),
the assembly facilitating shape comprising at least one of a protruding and depressed shape and a tapered shape,
**characterized in that**:
the inside diameter of the outer member (5, 15) is greater than the outside diameter of the inner member (4, 14); and
the outer member (5, 15) is axially compressed when put on the gripping part (3) of the barrel body (2).

2. The barrel (1, 11) for a writing implement according to claim 1, wherein the outer member (5, 15) is put on the inner member (4, 14) so as to be separable from the inner member (4, 14) and the barrel body (2).

3. The barrel (1, 11) for a writing implement according to claim 1 or 2, wherein the outer member (5, 15) is transparent or semitransparent and the inner member (4, 14) is colored in a color different from that of the outer member (5, 15).

4. The barrel (1, 11) for a writing implement according to claim 3, wherein the inside surface (5b, 15b) of the outer member (5, 15) is glossy.

5. The barrel (1, 11) for a writing implement according to any one of claims 1 to 4, wherein the inner member (4, 14) and the outer member (5, 15) are made of materials of different hardnesses, respectively, the inner member (4, 14) is made of an elastically deformable material having a low Shore hardness of Hs 40 or less, and the outer member (5, 15) is made of an elastically deformable material having a high Shore hardness.

6. The barrel (11) for a writing implement according to any one of claims 1 to 5, wherein the outer member (15) is be provided with a radially inwardly extending protrusion (20) at the front end thereof and the back end surface (20a) of the protrusion (20) is in contact with the front end surface (14a) of the inner member (14).

7. The barrel (1, 11) for a writing implement according to any one of claims 1 to 6, wherein the outer member (5, 15) has a mean wall thickness between 1 and 5 mm.

## Patentansprüche

1. Hülse (1, 11) für ein Schreibgerät, die umfasst:
einen Hülsenkörper (2) mit einem Greifteil (3); und
ein Griffelement (G, G') mit geschichtetem Aufbau, das ausgebildet wird, indem ein inneres Element (4, 14) aus einem elastisch verformbaren Material und ein äußeres Element (5, 15) aus einem elastisch verformbaren Material zusammengesetzt werden, und das so auf den Greifteit (3) des Hülsenkörpers (2) aufgesetzt ist, das das innere Element (4, 14) in Kontakt mit dem Greifteil (3) ist;
wobei das innere Element (4, 14) mit dem äußeren Element (5, 15) abgedeckt ist und wenigstens entweder die Außenfläche (4b, 14b) des inneren Elementes (4, 14) oder die Innenfläche (5b, 15b) des äußeren Elementes (5, 15) in einer das Zusammensetzen erleichternden Form ausgebildet ist, um das Aufsetzen des äußeren Elementes (5, 15) auf das innere Element (4, 14) zu erleichtern, und
die das Zusammensetzen erleichternde Form wenigstens eine vorstehende, eine vertiefte Form oder/und eine konische Form umfasst,
**dadurch gekennzeichnet, dass**:
der Innendurchmesser des äußeren Elementes (5, 15) größer ist als der Außendurchmesser des inneren Elementes (4, 14); und
das äußere Element (5, 15) axial zusammengedrückt wird, wenn es auf den Greifteil (3) des Hülsenkörpers (2) aufgesetzt wird.

2. Hülse (1, 11) für ein Schreibgerät nach Anspruch 1, wobei das äußere Element (5, 15) so auf das innere Element (4, 14) aufgesetzt wird, dass es von dem inneren Element (4, 14) und dem Hülsenkörper (2) getrennt werden kann.

3. Hülse (1, 11) für ein Schreibgerät nach Anspruch 1 oder 2, wobei das äußere Element (5, 15) transparent oder semitransparent ist und das innere Element (4, 14) in einer anderen Farbe gefärbt ist als das äußere Element (5, 15).

4. Hülse (1, 11) für ein Schreibgerät nach Anspruch 3, wobei die Innenfläche (5b, 15b) des äußeren Elementes (5, 15) glänzend ist.

5. Hülse (1, 11) für ein Schreibgerät nach einem der Ansprüche 1 bis 4, wobei das innere Element (4, 14) und das äußere Element (5, 15) jeweils aus Materialien unterschiedlicher Härte bestehen, das innere Element (4, 14) aus einem elastisch verformbaren Material besteht, das eine niedrige Shore-Härte von Hs 40 oder weniger hat, und das äußere Element (5, 15) aus einem elastisch verformbaren Material besteht, das eine hohe Shore-Härte hat.

6. Hülse (1, 11) für ein Schreibgerät nach einem der Ansprüche 1 bis 5, wobei das äußere Element (15) mit einem sich radial nach innen erstreckenden Vorsprung (20) an seinem vorderen Ende versehen ist und die hintere Endfläche (20a) des Vorsprungs (20) in Kontakt mit der vorderen Endfläche (14a) des inneren Elementes (14) ist.

7. Hülse (1, 11) für ein Schreibgerät nach einem der Ansprüche 1 bis 6, wobei das äußere Element (5, 15) eine mittlere Wanddicke zwischen 1 und 5 mm hat.

## Revendications

1. Gaine (1, 11) pour un instrument d'écriture, comprenant :
un corps de gaine (2) ayant une partie de préhension (3) ; et
un élément de préhension (G, G') réalisé avec une structure à couches, formée en assemblant un élément interne (4, 14) d'un matériau élastiquement déformable et un élément externe (5, 15) d'un matériau élastiquement déformable et placée sur la partie de préhension (3) du corps de gaine (2) de sorte que l'élément interne (4, 14) est en contact avec ladite partie de préhension (3) ;
dans laquelle l'élément interne (4, 14) est recouvert avec l'élément externe (5, 15) et au moins l'une ou l'autre parmi la surface externe (4b, 14b) de l'élément interne (4, 14) et la surface interne (5b, 15b) de l'élément externe (5, 15) est formée selon une forme facilitant l'assemblage afin de faciliter la mise en place de l'élément externe (5, 15) sur l'élément interne (4, 14),
la forme facilitant l'assemblage comprenant au moins l'une parmi une forme en saillie et enfoncée et une forme progressivement rétrécie,
**caractérisée en ce que** :
le diamètre interne de l'élément externe (5, 15) est supérieur au diamètre externe de l'élément interne (4, 14) ; et
l'élément externe (5, 15) est axialement comprimé lorsqu'il est placé sur la partie de préhension (3) du corps de gaine (2).

2. Gaine (1, 11) pour un instrument d'écriture selon la revendication 1, dans laquelle l'élément externe (5, 15) est placé sur l'élément interne (4, 14) afin de pouvoir être séparable de l'élément interne (4, 14) et du corps de gaine (2).

3. Gaine (1, 11) pour un instrument d'écriture selon la revendication 1 ou 2, dans laquelle l'élément externe (5, 15) est transparent ou semi-transparent et l'élément interne (4, 14) est coloré avec une couleur différente de celle de l'élément externe (5, 15).

4. Gaine (1, 11) pour un instrument d'écriture selon la revendication 3, dans laquelle la surface interne (5b, 15b) de l'élément externe (5, 15) est brillante.

5. Gaine (1, 11) pour un instrument d'écriture selon l'une quelconque des revendications 1 à 4, dans laquelle l'élément interne (4, 14) et l'élément externe (5, 15) sont réalisés avec des matériaux de différentes duretés, respectivement, l'élément interne (4, 14) est réalisé avec un matériau élastiquement déformable ayant une faible dureté Shore de 40 Hs ou moins et l'élément externe (5, 15) est réalisé avec un matériau élastiquement déformable ayant une dureté Shore élevée.

6. Gaine (11) pour un instrument d'écriture selon l'une quelconque des revendications 1 à 5, dans laquelle l'élément externe (15) doit être prévu avec une saillie (20) s'étendant radialement vers l'intérieur au niveau de son extrémité avant et la surface d'extrémité arrière (20a) de la saillie (20) est en contact avec la surface d'extrémité avant (14a) de l'élément interne (14).

7. Gaine (1, 11) pour un instrument d'écriture selon l'une quelconque des revendications 1 à 6, dans laquelle l'élément externe (5 15) a une épaisseur de paroi moyenne comprise entre 1 et 5 mm.
